# EUROPÄISCHE PATENTSCHRIFT

(11) **EP 2 719 580 B1**
(45) Veröffentlichungstag und Bekanntmachung des Hinweises auf die Patenterteilung: **18.11.2020**
(21) Anmeldenummer: 13185736.9
(22) Anmeldetag: 24.09.2013
(51) Int. Cl.: B60Q 1/24, B60Q 1/26, F21S 8/00

(54) **Suchscheinwerfer für Sonderfahrzeuge**
Searchlight for special vehicles
Projecteur de recherche pour véhicules spéciaux

(30) Priorität: 11.10.2012 DE 102012019942
(43) Veröffentlichungstag der Anmeldung: 16.04.2014
(73) Patentinhaber: Volkswagen Aktiengesellschaft, 38440 Wolfsburg (DE)
(72) Erfinder: Aragou, Alain, 38444 Wolfsburg (DE); Peenmöller, Stefan, 31234 Edemissen (DE); Schuldig, Dieter, 38114 Braunschweig (DE); Döring, Dr. Martin, 38124 Braunschweig (DE)

(56) Entgegenhaltungen:
- EP-A2- 1 650 078
- WO-A1-99/08897
- WO-A1-2011/154691
- US-A1- 2011 279 673
- US-A1- 2012 201 041

## Beschreibung

### Stand der Technik

Die vorliegende Erfindung betrifft ein Suchscheinwerfersystem für Sonderfahrzeuge. Insbesondere betrifft die vorliegende Erfindung eine neuartige Bedienung bzw. Steuerung eines fahrzeugbasierten Suchscheinwerfers.

Bekanntermaßen werden mobile Suchscheinwerfer häufig direkt durch den Anwender ausgerichtet, indem dieser den schwenkbar montierten Suchscheinwerfer mittels Muskelkraft in eine gewünschte Position bringt und ausrichtet. Solche Suchscheinwerfer sind in Sonderfahrzeugen beispielsweise fest mit der Windschutzscheibe des Sonderfahrzeugs verbunden, insbesondere verklebt, was bei einer Ausmusterung des Sonderfahrzeugs und einem Rückbau des Suchscheinwerfers häufig einen Austausch der Windschutzscheibe erforderlich macht. Zudem ist eine Dachmontage für Suchscheinwerfer auch aus anderen Gründen häufig von Vorteil, da hier mehr Platz zur Verfügung steht und Reflexionen an der Windschutzscheibe ebenso wie die übliche Wärmeentwicklung die Anwender nicht stören. Allerdings ist eine schnelle, intuitive und gezielte Ausrichtung des Suchscheinwerfers durch bekannte Vorrichtungen und Systeme nicht möglich. Die im Stand der Technik vorgeschlagenen Bedienelemente weisen häufig lediglich in Hardware realisierte Pfeile bzw. Richtungstasten auf, mit welchen der Suchscheinwerfer in unterschiedliche Richtungen (z. B. links bzw. rechts), gegebenenfalls in wenigen unterschiedlichen Geschwindigkeitsstufen, verstellt werden kann. Einerseits bedarf es einiger Übung, einen Suchscheinwerfer geeignet auszurichten, was insbesondere zur Verfolgung bewegter Ziele einige Schwierigkeiten mit sich bringt. Andererseits ergibt sich bei dem vorgeschriebenen System das Problem, dass eine Rückmeldung an den Anwender hinsichtlich einer tatsächlichen Ausrichtung des Suchscheinwerfers erst dann erfolgt, wenn der Suchscheinwerfer eingeschaltet ist, mit anderen Worten, sein Lichtkegel für den Anwender in Erscheinung tritt. Sofern der Anwender beim Einschalten des Suchscheinwerfers eine ungeeignete Ausrichtung des Suchscheinwerfers gewählt hat, sind potentielle Ziele des Lichtkegels bereits gewarnt, bevor sie selbst vom Lichtkegel erfasst werden. Der "Überraschungseffekt", welcher für Polizeieinsätze ("Razzien") mitunter erfolgsentscheidend ist, tritt somit nicht ein.

US 2011/0279673 A1 offenbart ein mit einem Kamerasystem ausgerüstetes Schnellboot, mittels welchem über Bord gegangene Matrosen identifiziert und verfolgt werden können. Zur Unterstützung der Bilderkennung ist den Kameras ein Scheinwerfer zugeordnet, welcher in einem gemeinsamen Gehäuse mit dem Kamerasystem angeordnet sein kann. Eine Steuereinheit kann beispielsweise drahtlos mit einer Verarbeitungseinheit verbunden sein, um Anwendereingaben zur Steuerung des Kamera-/Scheinwerfersystems entgegen zu nehmen.

EP 1 650 078 A2 offenbart ein Suchscheinwerfersystem, bei welchem unterschiedliche Parameter (z.B. Spot oder Flutlicht, Ausrichtung, Morsesignalgebung etc.) über ein Steuer-Pad durch einen Anwender verändert werden können. Dieses ist wasserdicht ausgeführt, um erhöhten Robustheitsanforderungen an die enthaltenen Knöpfe entsprechen zu können.

WO 99/08897 offenbart ein zentralisiertes Steuersystem für unterschiedliche Komponenten eines Polizeifahrzeugs. Eine mittels Signalleitungen mit dem Bordnetz elektrisch verbundene, eine berührungsempfindliche Oberfläche aufweisende Anzeige-/Bedieneinheit kann verwendet werden, Parameter einer Lichtzeichenanlage einzustellen.

Es ist daher eine Aufgabe der vorliegenden Erfindung, eine Bedienung eines Suchscheinwerfers auch für ungeübte Personen effektiv zu gestalten.

Es ist eine weitere Aufgabe der vorliegenden Erfindung, bei mit Suchscheinwerfern ausgestatteten Sonderfahrzeugen im Falle einer Ausmusterung eine Minderung des Gebrauchtwagenpreises durch erforderliche Rückrüstungen zu vermeiden.

### Offenbarung der Erfindung

Die vorstehend genannten Aufgaben werden erfindungsgemäß gelöst durch ein Suchscheinwerfersystem mit den Merkmalen gemäß Anspruch 1. Entsprechend weist das Suchscheinwerfersystem einen motorisch verstellbaren Suchscheinwerfer auf. Unter einem motorisch verstellbaren Suchscheinwerfer sei ein solcher Suchscheinwerfer verstanden, welcher z. B. hinsichtlich Einschaltzustand, Ausrichtung, Fokussierung und gegebenenfalls anderer Parameter lediglich durch Steuersignale verstellbar ist. Weiter weist das Suchscheinwerfersystem eine berührungssensitive Anzeigeeinheit, beispielsweise nach Art eines sogenannten "Touch Screens", auf. Mit anderen Worten kann die Anzeigeeinheit eine überlagerte Bedieneinheit aufweisen, welche auf Anwendereingaben in Form von Druck- und Ziehgesten ("Drag and Drop") reagiert und korrespondierende Steuersignale zu generieren im Stande ist. Erfindungsgemäß ist die Anzeigeeinheit als persönlicher digitaler Assistent (PDA) oder als Smartphone oder als Tablet-PC ausgeführt. Hierzu weist das erfindungsgemäße Suchscheinwerfersystem ein Steuergerät auf, mittels welchem es eingerichtet ist, Steuersignale an den Suchscheinwerfer zu senden. Mittels der Steuersignale kann eine Ausrichtung sowie ein Betriebszustand des Suchscheinwerfers anwenderseitig festgelegt werden. Anwendereingaben an der Bedieneinheit auf der Anzeigeneinheit ermöglichen eine Bedienung des Suchscheinwerfers. Dabei ist die Anzeigeneinheit eingerichtet, im Ansprechen auf eine Betätigung der Bedieneinheit ein korrespondierendes Steuersignal an das Steuergerät zu senden und ggf. eine optische Rückmeldung hinsichtlich der aktuellen (tatsächlichen) Ausrichtung des Suchscheinwerfers auszugeben. Auf diese Weise ist ein enges Zusammenwirken zwischen Anwendereingabe und Rückmeldung an den Anwender ermöglicht, wodurch das erfindungsgemäße Suchscheinwerfersystem intuitiv bedienbar ist. Als Leuchtmittel für den Suchscheinwerfer kommen alle bekannten Leuchtmittel wie z.B. Halogen, Xenon und insbesondere Licht Emittierende Dioden (LED) in Frage. Der Suchscheinwerfer kann bevorzugt in einen Dachbalken eines Einsatzfahrzeugs integrierbar/integriert sein.

Die Unteransprüche betreffen bevorzugte Weiterbildungen der Erfindung.

Bevorzugt umfasst die Anzeigeeinheit einen Bildschirm. Hierdurch wird es möglich, anwendergerechte Bedienelemente darzustellen und gegebenenfalls anzupassen. Insbesondere wenn der Bildschirm von der Bedieneinheit überlagert ist, ergibt sich eine intuitiv bedienbare und frei konfigurierbare Anwenderschnittstelle, mittels welcher der Suchscheinwerfer auch unter schwierigen Bedingungen und unter Zeitdruck sicher und effektiv eingesetzt werden kann. Auf diese Weise können separate Bedien- und Anzeigemittel, die später rückzubauen wären, entfallen.

Weiter bevorzugt handelt es sich bei der Bedieneinheit um eine berührungssensitive Oberfläche, welche mit der Oberfläche der Anzeigeeinheit zusammenfällt. Insbesondere kann dabei eine kapazitive und/oder temperaturempfindliche Oberfläche dafür sorgen, dass ein Anwender intuitive Fingergesten zur Bedienung des erfindungsgemäßen Suchscheinwerfersystems verwenden kann.

Vorteilhaft ist die Anzeigeeinheit eingerichtet, Anwendereingaben an einer vorbestimmten Stelle der Bedieneinheit in Steuersignale an das Steuergerät umzusetzen. Unter einer vorbestimmten Stelle sei im Rahmen der vorliegenden Erfindung dabei ein Oberflächenabschnitt bzw. -segment der Bedieneinheit verstanden, deren Betätigung (z.B. Drücken und/oder Ziehen) mit einer vorbestimmten Aktion hinterlegt ist. Zum Ausführen bzw. Aktivieren der vordefinierten Aktion generiert die Anzeigeeinheit hierbei ein Steuersignal, welches direkt oder indirekt an ein Steuergerät und/oder den Suchscheinwerfer geleitet werden kann. Dabei kann die vorbestimmte Stelle bevorzugt mit einem Ausrichtungsmerkmal des Suchscheinwerfers korrespondieren. Unter einem Ausrichtungsmerkmal des Suchscheinwerfers seien hierbei beispielsweise ein markanter Punkt im Strahl des Suchscheinwerfers und/oder eine Strahlachse des Suchscheinwerfers verstanden. Das Ausrichtungsmerkmal kann somit beispielsweise entweder eine Symmetrieachse durch den Lichtkegel des Suchscheinwerfers sein oder Randbereiche des Lichtkegels, welche durch die räumliche Zuordnung zwischen dem Lichtkegel und dem Reflektor im Scheinwerfergehäuse definiert werden. Auf diese Weise kann eine anwenderfreundliche Schnittstelle generiert werden, mittels welcher auch ein ungeübter Anwender die Ausrichtungscharakteristik des Suchscheinwerfers schnell und sicher modifizieren kann.

Hierbei kann insbesondere die Anzeigeneinheit eingerichtet sein, einen Bündelungsgrad des Suchscheinwerfers im Ansprechen auf zwei zeitgleich getätigte Anwendereingaben zu verändern. Unter dem Bündelungsgrad des Suchscheinwerfers sei hierbei der Öffnungskegel seines Lichtausfalls verstanden. Zwei zeitgleich getätigte Anwendereingaben können beispielsweise zwei Punkte auf der Bedieneinheit sein, welche der Anwender zeitgleich mit zwei Fingern berührt. Hierbei kann nun eine Veränderung des Abstandes der Stellen der Anwendereingaben auf der Bedieneinheit mit der Veränderung des Bündelungsgrades des Lichtkegels korrespondieren. Mit anderen Worten kann ein Entfernen zweier Finger, welche sich in Kontakt mit der Bedieneinheit befinden, dazu führen, dass der Bündelungsgrad verringert wird und der Lichtkegel sich verbreitert. Werden die Anwendereingaben dahingehend modifiziert, dass der Anwender beide Finger zueinander bewegt, kann der Suchscheinwerfer nach Art eines Spots fokussieren. Insofern, als berührungsempfindliche Eingaben mittlerweile durch viele Anwender intuitiv vorgenommen werden, können auch zeitliche Modifikationen der Abstrahlcharakteristik bzw. der Ausrichtungscharakteristik des Suchscheinwerfers sicher und präzise erfolgen.

Weiter bevorzugt kann das Suchscheinwerfersystem weiter ein Sensorsystem, insbesondere umfassend bildgebende Sensoren, wie beispielsweise eine optische Kamera, eine Infrarot- oder Wärmekamera, umfassen. Solche Systeme sind in modernen Fahrzeugen mitunter ohnehin verbaut, so dass ein zusätzlicher Hardwareaufwand gegenüber konfigurierbaren Sonderausstattungen nicht erforderlich ist. Beispielsweise sind Kamerasysteme zur Verkehrszeichenerkennung oder Nachtsichtsensoreinheiten für bestimmte Sonderausstattungen in der Serie bereits erprobt. Erfindungsgemäß kann nun die Anzeigeeinheit eingerichtet sein, die Bedieneinheit mit einer mittels des Sensorsystems erzeugten Darstellung zu hinterlegen. Mit anderen Worten kann die Anzeigeeinheit unter der berührungssensitiven Bedieneinheit eine Darstellung des aktuellen Fahrzeugumfeldes unter Verwendung der Sensorsignale anzeigen. Da die Fahrzeugbesatzung aufgrund des Sensorsystems gegebenenfalls eine bessere Orientierung aufgrund der im Fahrzeugumfeld aktiven Vorgänge erhält, kann auch eine Ausrichtung eines ausgeschalteten Suchscheinwerfers anhand einer solchen Darstellung gezielter und sicherer erfolgen. Gegebenenfalls wird (z.B. mittels einer ebenfalls in Serie häufig verbauten Rückfahrkamera) eine Ausrichtung des Suchscheinwerfers in Himmelsrichtungen ermöglicht, welche Fahrzeuginsassen ohne die Hilfe des Sensorsystems nicht ohne weiteres einsehen könnten.

Dabei kann das Suchscheinwerfersystem in einem Kalibriermodus eingerichtet sein, einen mittels des Sensorsystems erfassten und dargestellten Bereich mit Stellen der Bedieneinheit zu verknüpfen. Mit anderen Worten wird in einem Kalibriermodus beispielsweise der Erfassungsbereich des Sensorsignals (z.B. linker und rechter Randbereich des Kamerabildes) mit dem linken und rechten Rand der Bedieneinheit synchronisiert bzw. verknüpft. Betätigt nun der Anwender eine bestimmte Stelle zwischen dem linken und dem rechten Rand der Bedieneinheit, so korrespondiert diese mit einer entsprechenden Stelle im Kamerabild. Auch die möglichen Stellungen des Suchscheinwerfers können nun an das Kamerabild und die Bedieneinheit derart angepasst werden, dass die Ausrichtung des Suchscheinwerfers mit der Stelle auf der Bedieneinheit und dem korrespondierenden Punkt im Kamerabild korrespondiert. Auf diese Weise kann der Anwender auf der Bedieneinheit ein im Fahrzeugumfeld befindliches Objekt markieren, im Ansprechen worauf der Suchscheinwerfer sich automatisch in Richtung des markierten (realen) Objektes ausrichtet. Eine Ausrichtung des Suchscheinwerfers aufgrund wahlfreien Zugriffs (random access) ist somit möglich, während der Suchscheinwerfer nicht einmal eingeschaltet sein muss.

Weiter bevorzugt ist das Sensorsystem, insbesondere synchron, mit dem Suchscheinwerfer beweglich. Mit anderen Worten ist es nach der zuvor beschriebenen Kalibrierung möglich, die Ausrichtung des Sensors zu verändern, ohne die Zuordnung zwischen dem Erfassungsbereich des Sensors und dem Lichtkegel des Suchscheinwerfers zu verändern. Auf diese Weise können Fahrzeuginsassen einen Erfassungsbereich des Sensorsystems verändern, während die Bedieneinheit zur Ausrichtung des Suchscheinwerfers automatisch angepasst wird. Dabei kann die Darstellung auf der Anzeigeeinheit automatisch auf ein vom Anwender ausgewähltes und/oder markiertes Objekt zentrieren. Mit anderen Worten wird ein vom Anwender angetipptes Objekt durch Neuausrichtung des Sensorsystems zentral auf der Anzeigeeinheit dargestellt und der Fokus des Suchscheinwerfers auf selbiges Objekt geschwenkt. Auf diese Weise erhält der Anwender des Systems eine ideale Übersicht über das unmittelbare Umfeld des Objekts und gegebenenfalls erste Eindrücke über mögliche Fluchtrichtungen für das Objekt. Überdies kann eine erfindungsgemäße Ausrichtung des Suchscheinwerfers je nach Schwenk-/Erfassungsbereich des Sensors erheblich erweitert werden, ohne die zuvor beschriebene Zuordnung zwischen dem dargestellten Umgebungsabbild und der Steuerung des Suchscheinwerfers zu verlieren.

Weiter bevorzugt ist die Anzeigeeinheit eingerichtet, die Bedieneinheit mit einer mit einer Draufsicht auf das Fahrzeug korrespondierenden Darstellung zu hinterlegen. Alternativ oder zusätzlich zu den zuvor genannten Sensorbildern kann die Anzeigeeinheit dabei beispielsweise eine stilisierte Darstellung des Ego-Fahrzeugs mit dem beweglichen, auf dem Dach montierten Suchscheinwerfer darstellen. Beispielsweise kann zusätzlich ein aktuell eingestellter Lichtkegel des Suchscheinwerfers stilisiert dargestellt werden. Alternativ oder zusätzlich können Angebotsflächen dargestellt werden, welche beispielsweise die Mittelachse oder Randbereiche des Lichtkegels als Ausrichtungsmerkmale identifizieren und dem Anwender dabei signalisieren, dass bevorzugt durch Betätigen der Angebotsflächen Charakteristiken bzw. Ausrichtungsmerkmale des Suchscheinwerfers veränderbar sind. Insbesondere für den Fall, dass eine Rundumsicht um das Fahrzeug erforderlich erscheint, ist eine solche Draufsicht zur groben und schnellen Orientierung für den Anwender hilfreicher, als die vorgenannte Darstellung von sensorbasierten Bildern des tatsächlichen aktuellen Fahrzeugumfeldes. Erkennt ein Anwender des Systems beispielsweise aus dem Fenster der Fahrer, dass sich dort ein Objekt von Interesse aufhält, kann der Anwender auf das fahrerseitige Fenster in der Draufsicht tippen und der Suchscheinwerfer richtet sich in diese Richtung aus. Selbstverständlich kann eine solche Betätigung unabhängig von der tatsächlichen Entfernung zwischen dem in der Darstellung vorhandenen Suchscheinwerfer und dem vom Anwender gewählten Oberflächenabschnitt der Bedieneinheit sein. Alternativ kann eine solche Entfernung jedoch auch zum Fokussieren des Suchscheinwerfers verwendet werden. Mit anderen Worten kann ein nahe an der Fahrzeugabbildung betätigter Oberflächenabschnitt der Bedieneinheit eine leichte Fokussierung bzw. einen breiten Lichtkegel einstellen, während ferner der Fahrzeugdarstellung betätigte Oberflächenabschnitte zu einer stärkeren Fokussierung des Suchscheinwerfers führen, um hinreichend Lichtenergie auf den vermeintlichen Punkt des Interesses zu lenken.

Weiter bevorzugt wird vorgeschlagen, graphische Bedienelemente auf der Anzeigeneinheit anzuzeigen, wobei insbesondere eine stilisierte ON-OFF-Taste hilfreich ist. Für einfachere Darstellungen, insbesondere sofern wenig Platz auf der Anzeigeeinheit vorhanden ist, kann eine Ausrichtung des Suchscheinwerfers auch anhand eines einfachen Sliders bzw. Schiebereglers vorgenommen werden. Eine solche Darstellung kann insbesondere dann von Vorteil sein, wenn weitere Fahrzeugfunktionen zeitgleich auf der Anzeigeeinheit (z.B. für eine Steuerung des Suchscheinwerfers von Positionen außerhalb des Ego-Fahrzeugs) angezeigt werden sollen. In Frage kommen hierbei z.B. eine Lautstärke von Außenlautsprechern, ein Eingabefeld für auf Außendisplays anzuzeigende Nachrichten, eine Aktivierung von Signalhörnern und/oder Signalleuchten etc. Auch können, wie bereits zuvor beschrieben, Ankerpunkte als Betätigungsfelder zum Bewegen durch einen Anwender angezeigt werden, im Ansprechen worauf die Ausrichtungscharakteristik oder allgemein der Betriebszustand des Suchscheinwerfers verändert werden kann.

Gemäß einem weiteren Aspekt wird ein Fahrzeug, insbesondere Sonderfahrzeug, bevorzugt für den Polizeieinsatz, vorgeschlagen, welches ein Suchscheinwerfersystem gemäß den obigen Ausführungen aufweist. Hinsichtlich der Merkmale, der Funktion sowie der mit diesen verbundenen Vorteilen wird ebenfalls auf die obigen Erläuterungen verwiesen.

### Kurzbeschreibung der Figuren

Die vorbeschriebenen Merkmale und Aspekte der vorliegenden Erfindung werden anhand der beigefügten Zeichnungen im Folgenden eingehend erläutert. In den Zeichnungen ist:
- Fig. 1: eine schematische Übersicht über Systemkomponenten gemäß einem Ausführungsbeispiel des erfindungsgemäßen Suchscheinwerfersystems,
- Fig. 2: ein Ausführungsbeispiel für eine mögliche Darstellung von Bedienelementen auf einer Anzeigeeinheit,
- Fig. 3: ein Ausführungsbeispiel einer möglichen stilisierten Draufsicht auf das Sonderfahrzeug, wie sie zur Ausrichtung des Suchscheinwerfers verwendet werden könnte, und
- Fig. 4: eine sensorbasierte Ansicht eines Sonderfahrzeugumfeldes, anhand welcher ein Anwender die Anzeigeeinheit in Verbindung mit der Bedieneinheit zur Ausrichtung des Suchscheinwerfers verwenden könnte.

### Detaillierte Beschreibung von Ausführungsbeispielen

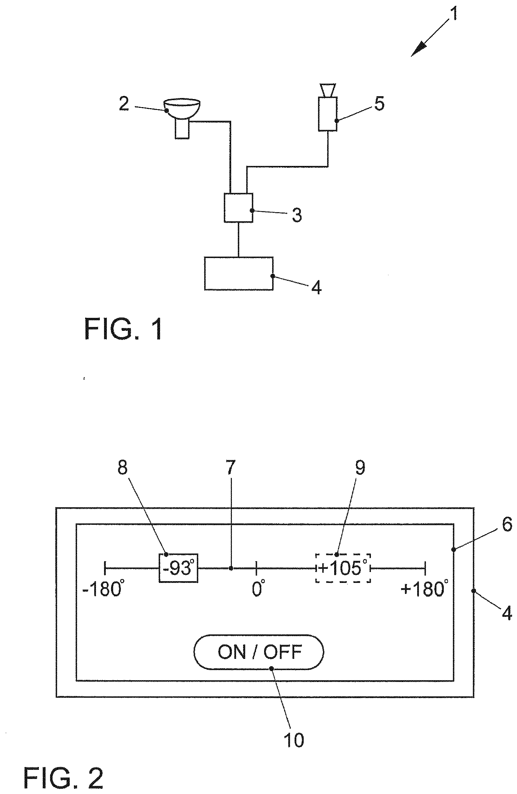

Fig. 1 zeigt eine schematische Ansicht eines Suchscheinwerfersystems 1, gemäß welcher ein Suchscheinwerfer 2 mit einem Steuergerät 3 verbunden ist. Das Steuergerät 3 ist seinerseits mit einer Touch-Screen-Anzeigeeinheit 4 mit einer kombinierten Bedieneinheit verbunden. Zur Darstellung des Fahrzeugumfeldes ist eine Wärmebildkamera 5 mit dem Steuergerät 3 verbunden, um als bildgebender Sensor Bilddaten an die Anzeigeeinheit 4 zu liefern.

Fig. 2 zeigt eine Anzeigeeinheit 4, welche eine Darstellung zur Bedienung eines Suchscheinwerfers 2 zeigt. Eine Gradskala 7 von -180° bis +180° symbolisiert die Ausrichtung des Suchscheinwerfers 2 in der Ebene. Während 0° die Fahrtrichtung des Fahrzeugs beschreibt, stehen die Winkelbereiche zwischen 0° und -180° für einen Schwenkbereich des Suchscheinwerfers auf der Fahrerseite des Fahrzeugs und entsprechend der Winkelbereich von 0° bis +180° für einen Schwenkbereich des Suchscheinwerfers in Richtung der Beifahrerseite. Eine Schaltfläche 8 ist auf der Skala 7 dargestellt, mit welcher zunächst die Ausrichtung (-93°) der Symmetrieachse des Suchscheinwerfers 2 angezeigt wird. Als zusätzliche Option ist gestrichelt eine zweite Schaltfläche 9 auf der Skala 7 eingezeichnet, welche eine alternative Einstellung des Suchscheinwerfers 2 darstellen kann. Jedoch ist es auch möglich, beide Bedienelemente 8 und 9 zeitgleich zu verwenden, indem beispielsweise die Bedienelemente 8 und 9 jeweils für einen linken und einen rechten Rand des Lichtkegels des Suchscheinwerfers 2 stehen. Werden die beiden Schaltflächen 8 und 9 voneinander entfernt, so verbreitert sich der Lichtkegel im Rahmen der Möglichkeiten des Suchscheinwerfers 2. Werden die Bedienelemente 8 und 9 in Richtung zueinander verschoben, so wird der Lichtkegel des Suchscheinwerfers 2 schmaler. Beispielsweise kann zusätzlich vorgesehen sein, dass im Falle, dass beide Bedienelemente 8 und 9 aufeinander geschoben werden, lediglich ein Bedienelement 8 oder 9 verbleibt, welches nachfolgend die Symmetrieachse des Suchscheinwerferkegels symbolisiert. Wird dieses Bedienelement 8 oder 9 mit zwei Fingern gedrückt und werden nun die Finger auseinandergezogen, kann die zuvor diskutierte Funktion wiederhergestellt werden, indem sich zwei getrennte Bedienelemente 8 und 9 ausbilden. Zusätzlich ist unterhalb der Skala 7 eine Schaltfläche 10 dargestellt, mittels welcher der Suchscheinwerfer (z.B. nach gewünschter Ausrichtung) ein- bzw. ausgeschaltet werden kann.

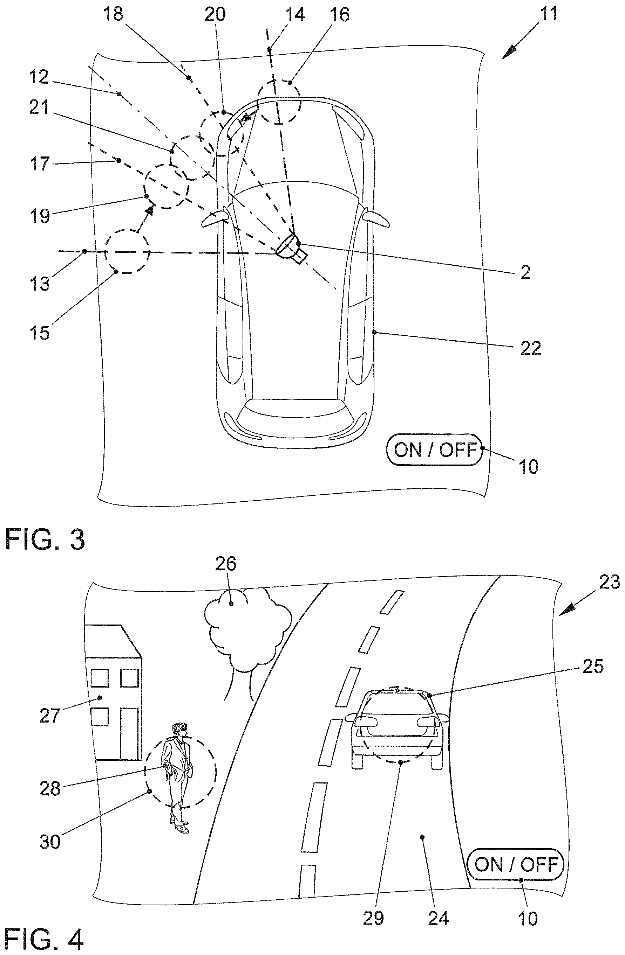

Fig. 3 zeigt eine stilisierte Draufsicht 11 auf ein Fahrzeug 22. Dieses Fahrzeug 22 muss nicht notwendigerweise exakt mit der Vogelperspektive des Ego-Fahrzeugs (Sonderfahrzeug) übereinstimmen, veranschaulicht und vereinfacht jedoch die Ausrichtung des auf dem Dach angebrachten Suchscheinwerfers 2. Dieser weist eine dargestellte Symmetrieachse 12 auf, welche stets in der Achse des Lichtkegels angeordnet ist. Ein erster (breiter) Strahlenverlauf ist durch die Strahlengrenzen 13 und 14 dargestellt. Eine mögliche stärkere Fokussierung wird durch die Strahlengrenzen 17 und 18 visualisiert. Alle vorgenannten Strahlengrenzen 13, 14, 17, 18 zeigen Ankerpunkte 15, 16, 19, 20, 21 als Bedienelemente an vorbestimmten Stellen der Bedieneinheit bzw. der unter dieser befindlichen Anzeigeeinheit 4 zur Veränderung von Ausrichtungsmerkmalen. Beispielsweise können, wie durch Pfeile angedeutet, die Ankerpunkte 15 und 16 in Richtung zueinander bewegt werden, so dass sie sich an den Positionen der dargestellten Ankerpunkte 19 und 20 befinden. Nicht nur die Darstellung der Strahlgrenzen 13, 14, 17, 18 verändert sich hierbei, sondern auch die tatsächliche Fokussierung des auf dem Dach des Fahrzeugs angebrachten Suchscheinwerfers 2. Werden die Ankerpunkte 19 und 20 weiter zueinander bewegt, können sie in Ankerpunkt 21 verschmelzen, wodurch eine Ausrichtung des Suchscheinwerfers 2 lediglich anhand eines Ankerpunktes 21 möglich ist, welcher mit der Symmetrieachse 12 des Suchscheinwerfers 2 korrespondiert. Wie in Verbindung mit Fig. 2 beschrieben, kann ein Auseinanderziehen des Ankerpunktes 21 dazu führen, dass nun auch wieder die Fokussierung des Suchscheinwerferkegels ermöglicht wird, indem die Lichtkegelgrenzen 13 und 14 bzw. 17 und 18 individuell bewegt werden können. Im unteren rechten Rand der Darstellung ist wieder ein ON/OFF-Schalter als Bedienelement 10 zum Ein- und Ausschalten des Suchscheinwerfers 2 vorgesehen.

Fig. 4 zeigt eine mögliche Darstellung 23, wie sie durch ein Sensorsystem 5 unterstützt auf einer Anzeigeeinheit 4 angezeigt werden könnte. Beispielhaft ist eine Straße 24 mit einem parkenden Auto 25, einem am Straßenrand befindlichen Baum 26, einem Wohnhaus 27 und einer laufenden Person 28 dargestellt. Sofern ein Anwender des Systems Interesse an weiteren Informationen über dargestellte Objekte erhalten möchte, kann er durch Fingerdruck Bedienelemente 29 und/oder 30 erzeugen bzw. bereits dargestellte Bedienelemente 29 und/oder 30 verwenden, um einen auf dem Fahrzeugdach montierten Suchscheinwerfer 2 auf das Fahrzeug 25 oder die laufende Person 28 zu richten. Zeitgleich oder zeitlich nachfolgend kann er die unten rechts in der Darstellung 23 befindliche ON/OFF-Taste 10 als Bedienelement verwenden, um den Suchscheinwerfer 2 ein- bzw. auszuschalten. Sofern sich das Auto 25 oder die Person 28 bewegt, kann der Anwender des Systems die Bedienelemente 29 und 30 auf der Anzeigeeinheit 4 nachführen, um den Fokus sowie Ausrichtung des Suchscheinwerfers entsprechend zu justieren. Bei Verwendung entsprechender Bildauswertealgorithmen kann eine solche Nachführung anhand mittels Sensorsystem erhaltener Bilddaten automatisch erfolgen.

Es ist ein Kerngedanke der vorliegenden Erfindung, Umrüstungs- bzw. Rückrüstungskosten eines Sonderfahrzeuges dadurch zu verringern, indem ein im Sonderfahrzeug verbauter Suchscheinwerfer mittels vielfältig verwendbarer und in Sonderfahrzeugen ohnehin häufig verwendeter Anzeige- und Bedienelemente zu steuern. Dabei werden mehrere insbesondere stufenlose Gesten und Bedienschritte ermöglicht, welche zusätzliche Funktionen und Vorteile ermöglichen bzw. mit sich bringen. Dabei korrespondiert eine Neuanordnung (z. B. durch Bewegung) eines Bedienelementes, welches mit einer bestimmten Ausrichtungscharakteristik eines Suchscheinwerfers verknüpft ist, unmittelbar mit einer entsprechenden Neuausrichtung des Suchscheinwerfers. Erfindungsgemäß wird daher eine wahlfreie Ausrichtung eines Suchscheinwerfers ermöglicht, welche durch im Stand der Technik bekannte Bedienelemente, welche lediglich eine Schwenkrichtung, gegebenenfalls mit unterschiedlichen Geschwindigkeiten, ermöglicht hat, nicht gegeben war. Zudem wird die Übersicht des Anwenders in unterschiedlichen Ausgestaltungen dadurch verbessert, dass bildliche Darstellungen stilisierter Fahrzeugsituationen und/oder aktueller Fahrzeugumgebungen zur Steuerung des Suchscheinwerfers verwendet werden können.

Die im Rahmen der Figurenbeschreibung diskutierten Bedienmöglichkeiten sind dabei lediglich als Beispiele zu verstehen. Anstatt den Scheinwerfer lediglich in der Horizontalen zu schwenken ist auch ein (z.B. mittels eines vertikal orientierten Reglers oder "Sliders") Anheben und Senken des Fokus' des Lichtkegels im Rahmen der Erfindung möglich.

Auch wenn die Erfindung anhand der vorbeschriebenen Ausführungsbeispiele detailliert und umfassend beschrieben worden ist, verbleiben Veränderungen, Auslassungen und Kombinationen offenbarter Merkmale im fachlichen Können des einschlägigen Fachmanns, wodurch keinesfalls der Umfang der vorliegenden Erfindung verlassen wird, deren Schutzbereich durch die beigefügten Ansprüche definiert wird.

## Patentansprüche

1. Suchscheinwerfersystem (1), umfassend:
- einen motorisch verstellbaren Suchscheinwerfer (2), insbesondere mit einer lichtemittierenden Diode (LED) als Leuchtmittel,
- eine berührungssensitive Anzeigeeinheit (4),
- ein Steuergerät (3),
wobei das Steuergerät (3) eingerichtet ist, Steuersignale an den Suchscheinwerfer (2) zu senden,
wobei die Anzeigeeinheit (4) eine Bedieneinheit zur Bedienung des Suchscheinwerfers (2) umfasst und eingerichtet ist, im Ansprechen auf eine Betätigung der Bedieneinheit ein korrespondierendes Steuersignal an das Steuergerät (3) zu senden, **dadurch gekennzeichnet, dass** die Anzeigeeinheit (4) ein per Drahtloskommunikation angeschlossener persönlicher digitaler Assistent oder ein Smartphone oder ein Tablet-PC ist.

2. Suchscheinwerfersystem (1) nach Anspruch 1, wobei die Anzeigeeinheit (4) einen Bildschirm umfasst, und/oder die Bedieneinheit eine berührungssensitive, insbesondere transparente, Fläche aufweist, insbesondere aus einer solchen besteht.

3. Suchscheinwerfersystem (1) nach einem der vorstehenden Ansprüche, wobei die Anzeigeeinheit (4) eingerichtet ist, eine Anwendereingabe an einer vorbestimmten Stelle (8, 9, 15, 16, 19, 20, 21) der Bedieneinheit in Steuersignale an das Steuergerät (3) umzusetzen, wobei die vorbestimmte Stelle (8, 9, 15, 16, 19, 20, 21) mit einem Ausrichtungsmerkmal des Suchscheinwerfers (2) korrespondiert.

4. Suchscheinwerfersystem (1) nach einem der vorstehenden Ansprüche, wobei die Anzeigeeinheit (4) eingerichtet ist, einen Bündelungsgrad des Suchscheinwerfers (2) im Ansprechen auf zwei zeitgleich getätigte Anwendereingaben (15, 16; 19, 20) entsprechend einer Veränderung des Abstandes der Stellen der Anwendereingaben (15, 16; 19, 20) auf der Bedieneinheit zu verändern.

5. Suchscheinwerfersystem (1) nach einem der vorstehenden Ansprüche, wobei das Suchscheinwerfersystem (1) weiter ein Sensorsystem (5), insbesondere umfassend bildgebende Sensoren, umfasst, und die Anzeigeeinheit (4) eingerichtet ist, die Bedieneinheit mit einer mittels des Sensorsystems (5) erzeugten Darstellung (23) zu hinterlegen.

6. Suchscheinwerfersystem (1) nach Anspruch 5, wobei das Suchscheinwerfersystem (1) einen Kalibriermodus aufweist, im welchem es eingerichtet ist, einen mittels des Sensorsystems (5) erfassten und dargestellten Bereich mit Stellen (15, 16; 19, 20; 21) der Bedieneinheit zu verknüpfen.

7. Suchscheinwerfersystem (1) nach einem der Ansprüche 5 oder 6, wobei das Sensorsystem (5) gemeinsam, insbesondere synchron, mit dem Suchscheinwerfer (2) ausrichtbar ist.

8. Suchscheinwerfersystem (1) nach einem der vorstehenden Ansprüche, wobei die Anzeigeeinheit (4) eingerichtet ist, die Bedieneinheit mit einer mit einer Draufsicht auf das Fahrzeug korrespondierenden Darstellung (11) zu hinterlegen.

9. Suchscheinwerfersystem (1) nach einem der vorstehenden Ansprüche, wobei die Anzeigeneinheit (4) eingerichtet ist, graphische Bedienelemente (8, 9, 10) anzuzeigen, welche insbesondere als ON/OFF-Taste, "Slider", Ankerpunkte (15, 16; 19, 20) zum Bewegen einer Achse (12) und/oder von Strahlgrenzen (13, 14; 17, 18) des Suchscheinwerfers (2) ausgestaltet sind.

10. Fahrzeug, umfassend ein Suchscheinwerfersystem (1) nach einem der vorstehenden Ansprüche.

## Claims

1. Searchlight system (1) comprising:
- a searchlight (2) with motorized adjustment, in particular with a light-emitting diode (LED) as light source,
- a touch-sensitive display unit (4),
- a control unit (3),
wherein the control unit (3) is configured to send control signals to the searchlight (2),
wherein the display unit (4) comprises an operating unit for operating the searchlight (2) and is configured to send a corresponding control signal to the control unit (3) in response to an operation of the operating unit, **characterized in that** the display unit (4) is a personal digital assistant connected by wireless communication, or a smartphone or a tablet PC.

2. Searchlight system (1) according to Claim 1, wherein the display unit (4) comprises a screen and/or the operating unit has a touch-sensitive, in particular transparent, surface, in particular consists of such a surface.

3. Searchlight system (1) according to any one of the preceding claims, wherein the display unit (4) is configured to convert a user input at a predetermined location (8, 9, 15, 16, 19, 20, 21) of the operating unit into control signals to the control unit (3), wherein the predetermined location (8, 9, 15, 16, 19, 20, 21) corresponds to an alignment feature of the searchlight (2).

4. Searchlight system (1) according to any one of the preceding claims, wherein the display unit (4) is configured to change a degree of focus of the searchlight (2) in response to two simultaneously made user inputs (15, 16; 19, 20) corresponding to a change in the distance of the locations of the user inputs (15, 16; 19, 20) on the operating unit.

5. Searchlight system (1) according to any one of the preceding claims, wherein the searchlight system (1) furthermore comprises a sensor system (5), in particular comprising imaging sensors, and the display unit (4) is configured to underlay the operating unit with an image (23) generated by the sensor system (5).

6. Searchlight system (1) according to Claim 5, wherein the searchlight system (1) has a calibration mode in which it is configured to link a region detected and imaged by means of the sensor system (5) to locations (15, 16; 19, 20; 21) of the operating unit.

7. Searchlight system (1) according to any one of Claims 5 or 6, wherein the sensor system (5) can be aligned together, in particular synchronously, with the searchlight (2).

8. Searchlight system (1) according to any one of the preceding claims, wherein the display unit (4) is configured to underlay the operating unit with an image (11) corresponding to a top view of the vehicle.

9. Searchlight system (1) according to any one of the preceding claims, wherein the display unit (4) is configured to display graphical control elements (8, 9, 10) which in particular take the form of an ON/OFF button, "sliders," anchor points (15, 16; 19, 20) for moving an axis (12) and/or beam boundaries (13, 14; 17, 18) of the searchlight (2).

10. Vehicle comprising a searchlight system (1) according to any one of the preceding claims.

## Revendications

1. Système de projecteur de recherche (1), comprenant :
- un projecteur de recherche (2) réglable au moyen d'un moteur, en particulier avec une diode électroluminescente (DEL) comme moyen d'éclairage,
- une unité d'affichage tactile (4),
- un appareil de commande (3),
l'appareil de commande (3) étant conçu pour envoyer des signaux de commande au projecteur de recherche (2),
l'unité d'affichage (4) comprenant une unité de commande pour la commande du projecteur de recherche (2) et étant conçue pour, en réponse à un actionnement de l'unité de commande, envoyer un signal de commande correspondant à l'appareil de commande (3), **caractérisé en ce que** l'unité d'affichage (4) est un assistant numérique personnel ou un téléphone intelligent ou un ordinateur tablette raccordé par communication sans fil.

2. Système de projecteur de recherche (1) selon la revendication 1, l'unité d'affichage (4) comprenant un écran et/ou l'unité de commande présentant une surface tactile, en particulier transparente, en particulier se composant d'une telle surface.

3. Système de projecteur de recherche (1) selon l'une quelconque des revendications précédentes, l'unité d'affichage (4) étant conçue pour convertir une saisie d'utilisateur à un emplacement prédéfini (8, 9, 15, 16, 19, 20, 21) de l'unité de commande en signaux de commande vers l'appareil de commande (3), l'emplacement prédéfini (8, 9, 15, 16, 19, 20, 21) correspondant à une caractéristique d'orientation du projecteur de recherche (2).

4. Système de projecteur de recherche (1) selon l'une quelconque des revendications précédentes, l'unité d'affichage (4) étant conçue pour modifier un degré de focalisation du projecteur de recherche (2) en réponse à deux saisies d'utilisateur (15, 16 ; 19, 20) réalisées simultanément, correspondant à une modification de la distance des emplacements des saisies d'utilisateur (15, 16 ; 19, 20) sur l'unité de commande.

5. Système de projecteur de recherche (1) selon l'une quelconque des revendications précédentes, le système de projecteur de recherche (1) comprenant en plus un système de capteurs (5), en particulier comprenant des capteurs générateurs d'images et l'unité d'affichage (4) étant conçue pour mettre comme fond à l'unité de commande une représentation (23) générée au moyen du système de capteurs (5).

6. Système de projecteur de recherche (1) selon la revendication 5, le système de projecteur de recherche (1) présentant un mode d'étalonnage, dans lequel il est conçu pour associer une zone détectée et représentée par le système de capteurs (5) à des emplacements (15, 16 ; 19, 20 ; 21) de l'unité de commande.

7. Système de projecteur de recherche (1) selon l'une quelconque des revendications 5 ou 6, le système de capteurs (5) pouvant être orienté conjointement, en particulier de façon synchrone, avec le projecteur de recherche (2).

8. Système de projecteur de recherche (1) selon l'une quelconque des revendications précédentes, l'unité d'affichage (4) étant conçue pour mettre comme fond à l'unité de commande une représentation (11) correspondant à une vue d'en haut du véhicule.

9. Système de projecteur de recherche (1) selon l'une quelconque des revendications précédentes, l'unité d'affichage (4) étant conçue pour afficher des éléments de commande graphiques (8, 9, 10), lesquels sont configurés en particulier comme une touche MARCHE/ARRÊT, des points d'ancrage de « curseur » (15, 16 ; 19, 20) pour le déplacement d'un axe (12) et/ou de limites de faisceau (13, 14 ; 17, 18) du projecteur de recherche (2).

10. Véhicule, comprenant un système de projecteur de recherche (1) selon l'une quelconque des revendications précédentes.
